# EUROPEAN PATENT SPECIFICATION

(11) **EP 2 079 218 B1**
(45) Date of publication and mention of the grant of the patent: **26.12.2012**
(21) Application number: 08150109.0
(22) Date of filing: 08.01.2008
(51) Int. Cl.: H04L 29/08, G06F 17/30

(54) **Method and system for displaying remote cache information**
Verfahren und Vorrichtung zur Anzeige von Remote-Cache-Informationen
Procédé et système d'affichage d'informations de cache distantes

(43) Date of publication of application: 15.07.2009
(73) Proprietor: Research In Motion Limited, Waterloo, ON N2L 3W8 (CA)
(72) Inventor: Martin, Daryl Joseph, Paradise Newfoundland & Labrador A1L 2Y6 (CA); O'Keefe, Christopher, St John's Newfoundland & Labrador A1B 4H (CA)
(74) Representative: Moore, Barry

(56) References cited:
- EP-A- 1 307 021
- EP-A- 1 333 638
- US-A- 6 049 821
- US-A1- 2006 168 129
- US-A1- 2007 198 734

## Description

The present application relates to communication networks, and more particularly, to a method and system for displaying remote cache information utilizing a modified HTML link.

Handheld wireless devices with Internet browser capabilities have become commonplace. While using a wireless handheld device, it is helpful for the user to know if a particular webpage has been cached, as this can be the deciding factor for following a HTML link, i.e. a cached webpage will typically download faster. It is a fact that there will be websites that take longer to load on a browser for reasons unrelated to the handheld device or the computer requesting the webpage.

US6049821, EP1333638 and EP1307021 all disclose systems in which an intermediary device in a network can assess information requested by a user device from a server or the like to determine whether to download the requested information or to provide other information associated with the requested information to the user device. In all cases, the requested information must be downloaded in full or already available at the intermediary device before said device can determine whether to download it to the user device or provide information associated with it to the user device. In US6049821, a proxy device can provide to a computing device advanced information such as file size for information downloaded from a server in response to a request from the computing device. However, the requested information must be downloaded to the proxy and analysed to obtain attributes such as file size, content characteristics, etc., and this requires that a download of the requested information to the proxy device is completed before the proxy device can analyse it to obtain the attributes.

In view of these deficiencies in the art, it will be appreciated that having information about delivery time, download delay, etc., can help a user navigate the Internet more efficiently. Accordingly, there remains a need for improvements in the art.

### GENERAL

The present application comprises embodiments of a method and system for displaying remote cache information utilizing modified HTML links. Embodiments according to the present invention are generally directed to a method and system for providing one or more status indicators associated with a request by a device for information from a website.

According to one broad aspect, there may be provided a method for providing status indicators associated with information requested from a website by a device, said method comprising the steps of: sending a request for information from the website from a browser operating on the device; receiving said request at a gateway; processing said request at said gateway and transmitting said request to the website; receiving information from the website and caching said information in a cache at said gateway; generating one or more status indicators associated with said information as it is being cached in said cache; and making said one or more status indicators available to the device.

According to another broad aspect, there may be provided a system for providing status information associated with a request for information from a website received from a device in a communication network, said system comprising: a browser running on the device and being responsive to an input for generating the request for information: an intermediary server coupled to the communication network and being responsive to the request for information and having a component for transmitting the request to the website; and said intermediary server having a cache for caching information received from the website, and a component for generating one or more status indicators associated with said information as it is being cached, and a component for transmitting one or more of said status indicators to the device.

According to a further broad aspect, there may be provided a processing device for providing status information associated with a request for information from a website, said processing device comprising: a cache for caching information received from the website: a component for generating one or more status indicators associated with said information as it is being cached; a file for storing said one or more status indicators; and a component responsive to a status request from a device for transmitting one or more of said status indicators to the device.

According to a further broad aspect, there may be provided a processor for a mobile device for providing status information associated with a remote cache, the remote cache being configured to cache data received from a web server in response to a request from the mobile device, said processor comprising: a component configured for obtaining one or more status indicators associated with said information as it is being cached at the remote cache; and a component configured for displaying said one or more status indicators at the mobile device.

Other aspects and features according to the present application will become apparent to those ordinarily skilled in the art upon review of the following description of embodiments of the invention in conjunction with the accompanying figures.

### BRIEF DESCRIPTION OF THE DRAWINGS

Reference will now be made to the accompanying drawings which show, by way of example, embodiments of the present application, and in which:

Fig. 1 shows in diagrammatic form an exemplary network environment suitable for operating an embodiment according to the present application;

Fig. 2 shows in schematic form an exemplary mobile wireless communication device which is capable of communicating within the network environment of Fig. 1;

Fig. 3(a) shows in diagrammatic form a screen for operating a mobile communications device in accordance with an embodiment; and

Fig. 3(b) shows in diagrammatic form a screen for operating a mobile communications device in accordance with an embodiment.

Like reference numerals indicate like or corresponding elements in the drawings.

### DESCRIPTION OF PREFERRED EMBODIMENTS

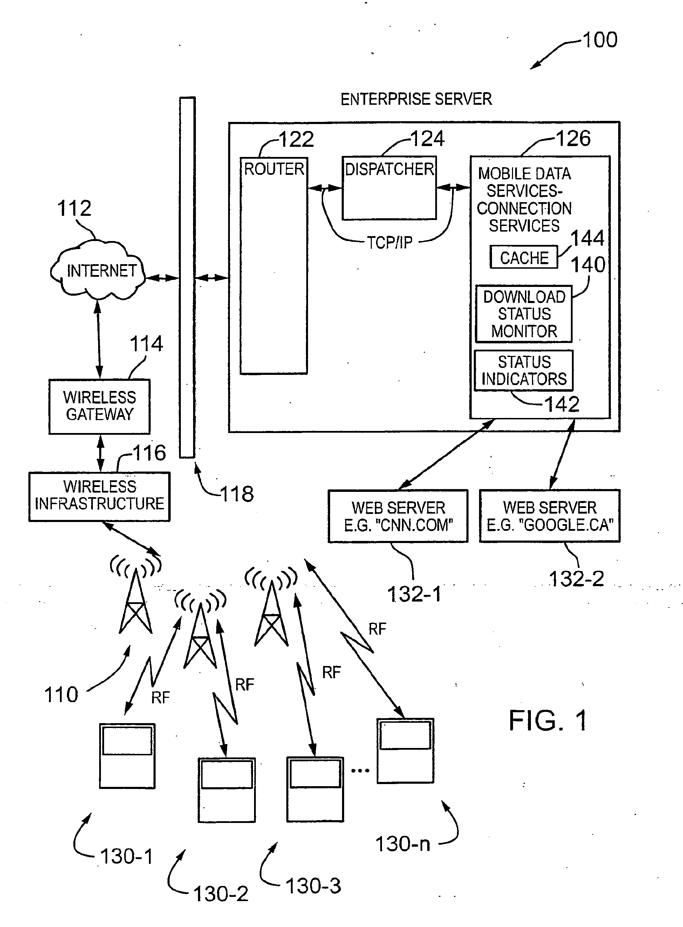

Reference is first made to Fig. 1, which shows in diagrammatic form an exemplary network environment 100 wherein an embodiment as described herein may be practiced. The network environment 100 comprises a wireless network 110, the Internet 112, a wireless gateway 114, a wireless infrastructure 116, and an enterprise server 120. The wireless network 110 serves a plurality of users, each having a mobile communication device (MCD) 130, indicated individually as 130-1, 130-2,....130-n.

The wireless gateway 114 and the wireless infrastructure 116 provide a link between the Internet 112 and the wireless network 110. The wireless infrastructure 116 determines the most likely network for locating a given user and tracks the users as they roam between countries or networks. A message is then delivered to the mobile communication device 130 via wireless transmission, typically at a radio frequency (RF), from a base station in the wireless network 110 to the mobile device 130. The wireless network 110 may comprise any wireless network over which messages may be exchanged with a mobile communication device.

The wireless infrastructure 116 includes a series of connections to wireless network 110. These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Divisional Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric networks include the Mobitex.TM. Radio Network and the DataTAC.TM. Radio Network. Examples of older voice-centric data networks include Personal Communication Systems (PCS) networks like GSM, and TDMA systems.

The enterprise server 120 may be implemented, for example, on a network computer within a firewall 118 for a corporation, a computer within an ISP system or the like. The enterprise server 120 provides an interface for email exchange over the Internet 112 and web access on the Internet 112 for mobile communication devices 130 equipped with a browser or having browser capability as will be described in more detail below.

The enterprise server 120, for example, implemented as a BlackBerry® Enterprise Server or BES, comprises a software module running on a server that acts as the centralized link between the mobile wireless communication devices 130, the wireless networks 110 and the enterprise applications. The server 120 integrates with enterprise messaging (e.g. Microsoft Exchange email system) and collaboration systems to provide the users of the mobile communication devices 130 with access to email, enterprise instant messaging and personal information management tools. All data between applications and the mobile communication devices 130 flows centrally through the enterprise server 120. As shown in Fig. 1, the enterprise server 120 comprises a router 122, a dispatcher 124 and a Mobile Data Services-Connection Services (MDS-CS) module or system 126.

The router 122 is designed to connect to the wireless network 110 to route data to and from the mobile wireless communication devices 130. The dispatcher 124 is designed to compress and encrypt the data communications for the mobile communication devices 130. The dispatcher 124 routes or moves the data through the router 122 to and from the wireless network 110. The Mobile Data Services module 126, for example, the BlackBerry^{®} MDS™ Connection Service, functions as a gateway and is designed to manage interactions and requests between mobile wireless communication devices 130 (for example, BlackBerry® handheld devices) and enterprise applications. The Mobile Data Services system 126 enables always-on/push-based access to enterprise applications and information using the mobile communication device 130, browser and software development tools. The MDS 126 provides connectivity (i.e. HTTP/HTTPS) to the Internet 112. In addition, the MDS 126 provides an extensible and secure interface for extending corporate applications and the corporate Intranet based on existing web standards.

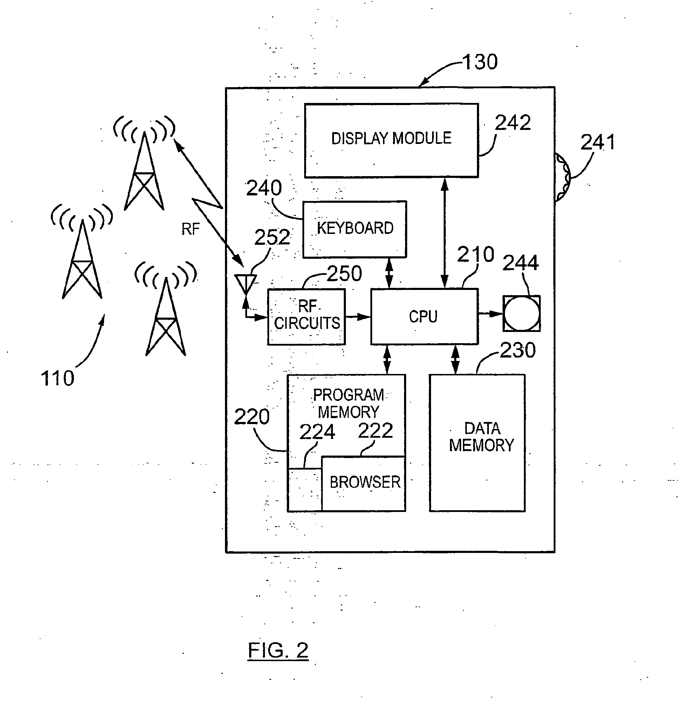

Reference is next made to Fig. 2, which shows in more detail an exemplary implementation of the mobile communication device 130. The mobile communication device 130 comprises a central processing unit or CPU 210. The CPU 210 operates under the control of a program (i.e. firmware or software) stored in program memory 220. The CPU 210 is also provided with data memory 230. The CPU 210 is operatively coupled to a keyboard and track wheel 240 or a trackball (not shown), a display module 242 and an audio transducer or speaker 244. In addition to the program executable code providing for performing the functions associated with the operation of the mobile communication device 130, the program memory 220 includes a browser program 222. The browser program 222 allows a user to access web pages on the Internet 112 using the mobile communication device 130, i.e. utilizing a graphical user interface comprising, for example, the keyboard 240 and the display module 242 and/or a track wheel 241.

As shown, the mobile communication device 130 includes a RF demodulation/modulation and decoding/coding circuits 250, and a suitable RF antenna 252. The RF demodulator/modulator and decoder/coder circuits 250 and the RF antenna 252 are operatively coupled to the CPU 210 and provide an interface for wireless communication with the wireless network 110. The particular implementation details of the RF circuits will be within the understanding of those skilled in the art, and is therefore not described in further detail.

To browse the Internet, the user invokes the browser program 222 in the mobile communication device 130 and using the graphical user interface (i.e. the display 242, the keyboard 240 and/or a thumb-operated track wheel 241) enters the URL or a bookmark for a website of interest, for example, http://www.google.ca. The browser 222 converts the user entry into a HTTP request and sends the request to the enterprise server 120. According to an embodiment, the device 130 includes a program module 224 which takes the HTTP request and converts and compresses it into a data format which is then sent to the enterprise server 120. The enterprise server 120, i.e. the MDS-CS 126, processes the HTTP request received from the handheld device 130 and transmits the HTTP request to the web server, for example, web server 132 for "google.ca". In response to the request, the web server 132-1 returns the requested or corresponding webpage, which is relayed by the MDS-CS 126 to the mobile communications device 130. According to an embodiment, the MDS-CS 126 converts and compresses the data or information from the web site into a data format that is more efficient for wireless transmission.

The originating client, for example, a web browser, is typically referred to as the "user agent". The destination server stores resources, such as, HTML files and images, and is typically referred to as the "origin server". In between the user agent and the origin server there may be several intermediaries, for example, proxies and gateways. In the context of the present application, the mobile handheld devices 130 comprise user agents, the enterprise server or module 120 comprises an intermediary server or a MDS-CS module 126, and the web servers 132 comprise origin servers. According to an embodiment, the intermediary server is located or configured behind a firewall.

According to an embodiment, the enterprise server 120 includes a webpage download status monitor indicated generally by reference 140. The download status monitor 140 provides a mechanism to determine the download status of the requested webpage and provide status information to the user of the mobile communication device 130 as will be described in more detail below. The download status monitor 140 may be implemented as a software module or object in the MDS-CS 126, which may also be implemented as a software module according to an embodiment.

According to one embodiment, the webpage download status monitor 140 is implemented with an HTML/HTTP based mechanism. HTTP (i.e. Hypertext Transfer Protocol) is a method for transferring information on the World Wide Web (i.e. "www"), and comprises a request/response protocol between clients and servers. The originating client, for example, a web browser, is typically referred to as the "user agent". The destination server stores resources, such as, HTML files and images, and is typically referred to as the "origin server". In between the user agent and the origin server there may be several intermediaries, for example, proxies and gateways. In the context of the present application, the mobile handheld devices 130 comprise user agents, the MDS-CS system or module 126 comprises a gateway, and the web servers 132 comprise origin servers.

According to an embodiment, the mobile handheld device 130, i.e. the HTTP client, initiates a request by transmitting the request to the MDS-CS 126. The MDS-CS 126, in turn, establishes a Transmission Control Protocol (TCP) connection to a port on a remote host and the HTTP server (i.e. web server 130) listening on that port waits for the request message. Upon receiving the request, the web server 130 sends back a status line, such as "HTTP/1.1 404 OK", and a message having a body for the requested file or information or webpage. The MDS-CS 126 converts the message received from the web server 130 into a format or protocol suitable for transmission (e.g. wireless transmission with data compression) to the mobile communication device 130. The formatted message is received by the mobile handheld device 130 and converted by the device and/or browser program 222 (i.e. executed from the program memory 220) into a display format for the display module 242.

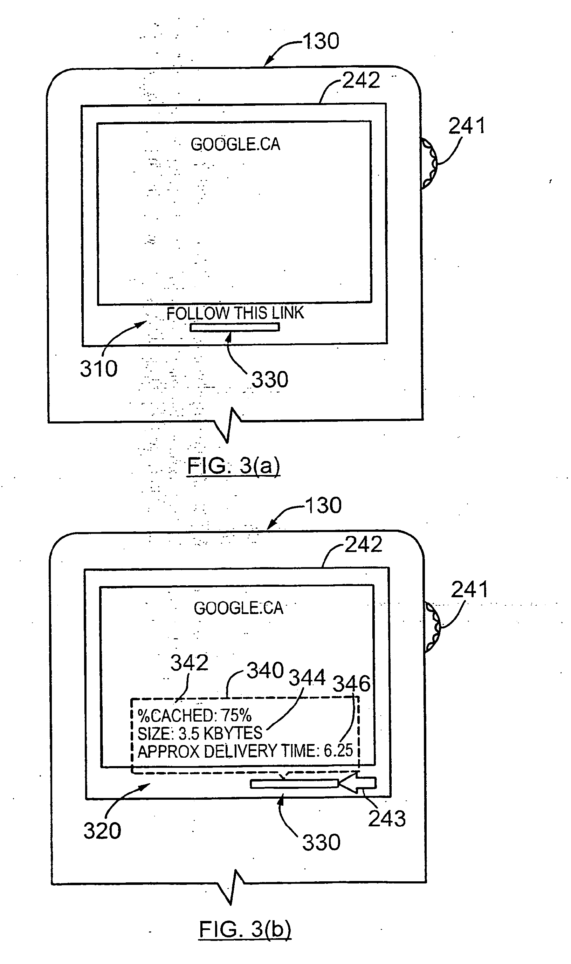

According to one embodiment, the webpage download status monitor 140 comprises an HTML-based mechanism. According to one embodiment, the download status monitor 140 monitors the downloading or caching (i.e. in cache 144) of the requested webpage from the web server 132, and collects and generates status indicators and/or download statistics associated with the webpage download or cached webpage. According to one embodiment, the status indicators comprise a file size indicator, a cache percentage (%) indicator, and an approximate download or delivery time indication. The status indicators are displayed or accessed on the mobile handheld device 130, for example, by way of a graphical user interface or GUI as indicated by reference 310 in Fig. 3(a). According to one embodiment, the status indicators are stored in an HTML file 142 (Fig. 2) or other type of hypertext based or web resource, for example, in the MDS-CS 126, and an HTML link (i.e. hyperlink) having the form, for example, as shown in Fig. 3(a) and indicated by reference 330 is provided. The HTML link 330 is activated, for example, as shown in Fig. 3(a) by moving the cursor 243 over the hypertext using the track wheel 241 or other navigation keys on the keyboard 240. In response to the activation (i.e. "mousing") of the HTML link 330, the browser program 222 creates a link with the HTML file 142 on the MDS-CS 126, and the corresponding status indicators are downloaded or transferred to the browser 222.

According to one embodiment, the status indicators are presented in a popup window, box or balloon, for example, having the form as shown in Fig. 3(b) and indicated generally by reference 340. As shown in Fig. 3(b), the popup window 340 comprises a "% cached" display field or line 342, a file "Size" display field or line 344, and an "Approx Delivery Time" display field or line 346. According to one embodiment, the download status monitor 140 generates an HTML data message having the following form:
<a href=http://rim.com; <http://www.rim.com> % Cached = 75%; Size = 3.5KB; Delivery Time = 6.2s >RIM</a>
According to this aspect, the MDS-CS 126 functions as a proxy or gateway for the mobile handheld device 130, and the % Cached field 342 displays the percentage or portion of the webpage or file that is cached at the MDS-CS 126, i.e. remains to be downloaded to the handheld device 130. The Size field 344 displays the size of the webpage or file that is being downloaded. The Approx Delivery Time field displays the estimated time for downloading the webpage or file to the handheld device 130. The software functions or modules for determining cached file percentage, file size and estimated delivery time may be implemented in the download status monitor 140 and/or the MDS-CS 126, and the particular implementation details will be apparent to one skilled in the art.

According to another embodiment, the status information or indicators may include a % Cached on Server field, a % Cached on Device field, an Age of the Cached Information field, and/or an Approximation of Data Transmitted to the Device field. In addition, the status information may include general information on the webpage or download.

According to another embodiment, the HTML link 330 may be implemented utilizing one or more colours to differentiate the link 330 and/or different states of the link in a graphical user interface. For example, the colour of the HTML link 330 may be displayed in a defined colour to indicate that the requested webpage has been cached, and by moving the cursor over the link 330, the associated status data is displayed.

While the embodiments of the system and methods have been described in the context of wireless or mobile communication devices, it will be appreciated that the systems and methods have wider applicability to other types of devices or computers that receive web pages.

The present invention may be embodied in other specific forms without departing from the spirit or essential characteristics thereof. Certain adaptations and modifications of the invention will be obvious to those skilled in the art. Therefore, the presently discussed embodiments are considered to be illustrative and not restrictive, the scope of the invention being indicated by the appended claims rather than the foregoing description, and all changes which come within the meaning and range of equivalency of the claims are therefore intended to be embraced therein.

## Claims

1. A method for providing status indicators (340) associated with information requested from a website (132) by a device (130), said method comprising the steps of:
sending a request for information from the website (132) from a browser (222) operating on the device (130);
receiving said request at a gateway (120);
processing said request at said gateway (120) and transmitting said request to the website (132);
receiving information from the website (132) and caching said information in a cache (144) at said gateway (120);
generating one or more status indicators (340) associated with said information as it is being cached in said cache (144); and
making said one or more status indicators (340) available to the device (130).

2. The method as claimed in claim 1, wherein said step of making said one or more status indicators (340) available to said device (130) comprises transmitting said one or more status indicators (340) to said device (130) in response to a status request (330), and said status request (330) being generated at the device (130).

3. The method as claimed in claim 2, wherein said status request comprises an HyperText Markup Language 'HTML' link (330), and said HTML link (330) being responsive to a user input on the device (130).

4. The method as claimed in any one of claims I to 3, wherein said status indicators (340) comprise one or more of a cache percentage (342), a delivery time estimate (346), percentage cached at the gateway (120), percentage cached at the device (130), and an age of the cached information.

5. The method as claimed in any one of the preceding claims, wherein the device (130) comprises a mobile communication device.

6. A system (100) for providing status information associated with a request for information from a website (132) received from a device (130) in a communication network (110), said system (100) comprising:
a browser (222) running on the device (130) and being responsive to an input for generating the request for information;
an intermediary server (120) coupled to the communication network (110) and being responsive to the request for information and having a component for transmitting (126) the request to the website (132); and
said intermediary server (120) having a cache (144) for caching information received from the website (132), and a component for generating (142) one or more status indicators (340) associated with said information as it is being cached, and a component for transmitting (140) one or more of said status indicators (340) to the device (130).

7. The system as claimed in claim 6, wherein said component for transmitting (140) one or more of said status indicators (340) is arranged to be responsive to a status request (330) from the device (130).

8. The system as claimed in claim 6 or claim 7, wherein said intermediary server (120) has a HyperText Markup Language 'HTML' file (142), and said one or more status indicators (340) being stored in said HTML file (142).

9. The system as claimed in claim 8, wherein said status request comprises an HTML link (330) associated with said HTML file (142), and said HTML link (330) being responsive to a user input at the device (130).

10. The system as claimed in any one of claims 6 to 9, wherein said device (130) is arranged to display said one or more status indicators (340).

11. The system as claimed in any one of claims 6 to 10, wherein said status indicators (340) comprise one or more of a cache percentage (342), a delivery time estimate (346), percentage cached at the gateway (120), percentage cached at the device (130), and an age of the cached information.

12. The system as claimed in any one of claims 6 to 11, wherein said intermediary server (120) has an association with an enterprise server.

13. The system as claimed in any one of claims 6 to 12, wherein said intermediary server (120) is located behind a firewall (118).

14. A processing device for providing status information associated with a request for information from a website (132), said processing device comprising:
a cache (144) for caching information received from the website (132);
a component for generating (140) one or more status indicators (340) associated with said information as it is being cached;
a file (142) for storing said one or more status indicators (340); and
a component (140) responsive to a status request from a communication device (130) for transmitting one or more of said status indicators (340) to the communication device (130).

15. The processing device as claimed in claim 14, wherein said status request comprises a HyperText Markup Language 'HTML' link (330), and said HTML link (330) being associated with said file (142).

16. The processing device as claimed in claim 15, wherein said file (142) comprises an HTML file, and said HTML file (142) being linked to said HTML link (330) on said communication device (130).

17. The processing device as claimed in claim 16, wherein the communication device (130) has a graphical user interface (310) for activating said HTML link (330) and displaying said one or more status indicators (340) transmitted to said communication device (130).

18. The processing device as claimed in any one of claims 14 to 17, wherein said status indicators (340) comprise one or more of a cache percentage (342), a delivery time estimate (346), percentage cached at the gateway (120), percentage cached at the communication device (130), and an age of the cached information.

19. The processing device as claimed in any one of claims 14 to 18, wherein said communication device (130) comprises a mobile communication device, said mobile communication device being operatively coupled to a wireless communication network (110).

20. The processing device as claimed in any one of claims 14 to 18, wherein said device (130) comprises a computer operatively coupled to a communication network.

## Patentansprüche

1. Verfahren zum Bereitstellen von Statusanzeigen (340), die mit Information verknüpft sind, die von einer Website (132) durch eine Vorrichtung (130) angefragt ist, wobei das Verfahren die folgenden Schritte aufweist:
Senden einer Anfrage für Information von der Website (132) von einem Browser (222), der auf der Vorrichtung (130) läuft,
Empfangen der Anfrage an einem Gateway (120),
Bearbeiten der Anfrage an dem Gateway (120) und Übermitteln der Anfrage an die Website (132),
Empfangen der Information von der Website (132) und Zwischenspeichern der Information in dem Cachespeicher (144) an dem Gateway (120),
Erzeugen eines oder mehrerer Statusanzeigen (340), die mit der Information verknüpft sind, während sie in dem Cachespeicher (144) zwischengespeichert wird und
Zur-Verfügung-Stellen des einen oder der mehreren Statusanzeigen (340) an die Vorrichtung (130).

2. Verfahren nach Anspruch 1, wobei das Zur-Verfügung-Stellen des einen oder der mehreren Statusanzeigen (340) an die Vorrichtung (130) ein Übermitteln des einen oder der mehreren Statusanzeigen (340) an die Vorrichtung (130) als Reaktion auf eine Statusanfrage (330) aufweist und die Statusanfrage (330) an der Vorrichtung (130) erzeugt wird.

3. Verfahren nach Anspruch 2, wobei die Statusanfrage einen Hypertext-Auszeichnungssprachen-Link, 'HTML'-Link, (330) aufweist und der HTML-Link (330) auf eine Benutzereingabe an der Vorrichtung (130) reagiert.

4. Verfahren nach einem der Ansprüche 1 bis 3, wobei die Statusanzeigen (340) ein oder mehrere aus einem Cache-Prozentsatz (342), einer Lieferzeitschätzung (346), einem Prozentsatz an Zwischengespeichertem an dem Gateway (120), einem Prozentsatz an Zwischengespeichertem an der Vorrichtung (130) und einem Alter der zwischengespeicherten Information aufweisen.

5. Verfahren nach einem der vorhergehenden Ansprüche, wobei die Vorrichtung (130) eine Mobilkommunikationsvorrichtung aufweist.

6. System (100) zum Bereitstellen von Statusinformation, die mit einer Anfrage für Information von einer Website (132) verknüpft ist, die von einer Vorrichtung (130) in einem Kommunikationsnetz (110) empfangen ist, wobei das System (100) Folgendes aufweist:
einen Browser (222), der auf der Vorrichtung (130) läuft und der auf eine Eingabe zum Erzeugen der Anfrage für die Information reagiert,
einen zwischengeschalteten Server (120), der mit dem Kommunikationsnetz (110) gekoppelt ist und auf die Anfrage für Information reagiert und eine Komponente zum Übermitteln (126) der Anfrage an die Website (132) aufweist,
wobei der zwischengeschaltete Server (120) einen Cachespeicher (144) zum Zwischenspeichern von von der Website (132) empfangener Information und eine Komponente zum Erzeugen (142) von einem oder mehreren Statusanzeigen (340), die mit der Information verknüpft sind, während sie zwischengespeichert wird, und eine Komponente zum Übermitteln (140) von einem oder mehreren der Statusanzeigen (340) an die Vorrichtung (130) aufweist.

7. System nach Anspruch 6, wobei die Komponente zum Übermitteln (140) von einem oder mehreren der Statusanzeigen (340) dazu ausgelegt ist, auf eine Statusanfrage (330) von der Vorrichtung (130) zu reagieren.

8. System nach Anspruch 6 oder 7, wobei der zwischengeschaltete Server (120) eine Hypertext-Auszeichnungssprachen-Datei, 'HTML'-Datei, (142) aufweist und der eine oder die mehreren Statusanzeigen (340) in der HTML-Datei (142) gespeichert werden.

9. System nach Anspruch 8, wobei die Statusanfrage einen HTML-Link (330) aufweist, der mit der HTML-Datei (142) verknüpft ist, wobei der HTML-Link (330) auf eine Benutzereingabe an der Vorrichtung (130) reagiert.

10. System nach einem der Ansprüche 6 bis 9, wobei die Vorrichtung (130) dazu ausgelegt ist, den einen oder die mehreren Statusanzeigen (340) anzuzeigen.

11. System nach einem der Ansprüche 6 bis 10, wobei die Statusanzeigen (340) ein oder mehrere aus einem Cache-Prozentsatz (342), einer Lieferzeitschätzung (346), einem Prozentsatz an Zwischengespeichertem an dem Gateway (120), einem Prozentsatz an Zwischengespeichertem an der Vorrichtung (130) und einem Alter der zwischengespeicherten Information aufweisen.

12. System nach einem der Ansprüche 6 bis 11, wobei der zwischengeschaltete Server (120) eine Verknüpfung mit einem Unternehmensserver aufweist.

13. System nach einem der Ansprüche 6 bis 12, wobei sich der zwischengeschaltete Server (120) hinter einer Firewall (118) befindet.

14. Verarbeitungsvorrichtung zum Bereitstellen von Statusinformation, die mit einer Anfrage für Information von einer Website (132) verknüpft ist, wobei die Vorrichtung Folgendes aufweist:
einen Cachespeicher (144) zum Zwischenspeichern von Information, die von der Website (132) empfangen ist,
eine Komponente zum Erzeugen (140) von einem oder mehreren Statusanzeigen (340), die mit der Information verknüpft sind, während sie zwischengespeichert wird,
eine Datei (142) zum Speichern des einen oder der mehreren Statusanzeigen (340) und
eine Komponente (140), die auf eine Statusanfrage von einer Kommunikationsvorrichtung (130) zum Übermitteln einer oder mehrerer der Statusanzeigen (340) an die Kommunikationsvorrichtung (130) reagiert.

15. Verarbeitungsvorrichtung nach Anspruch 14, wobei die Statusanfrage einen Hypertext-Auszeichnungssprachen-Link, 'HTML'-Link, (330) aufweist und der HTML-Link (330) mit der Datei (142) verknüpft ist.

16. Verarbeitungsvorrichtung nach Anspruch 15, wobei die Datei (142) eine HTML-Datei aufweist und die HTML-Datei (142) mit dem HTML-Link (330) auf der Kommunikationsvorrichtung verknüpft ist.

17. Verarbeitungsvorrichtung nach Anspruch 16, wobei die Kommunikationsvorrichtung (130) eine grafische Benutzeroberfläche (310) zum Aktivieren des HTML-Links (330) und Anzeigen des einen oder der mehreren Statusanzeigen (340) aufweist, die an die Kommunikationsvorrichtung (130) übermittelt sind.

18. Verarbeitungsvorrichtung nach einem der Ansprüche 14 bis 17, wobei die Statusanzeigen (340) ein oder mehrere aus einem Cache-Prozentsatz (342), einer Lieferzeitschätzung (346), einem Prozentsatz an Zwischengespeichertem an dem Gateway (120), einem Prozentsatz an Zwischengespeichertem an der Vorrichtung (130) und einem Alter der zwischengespeicherten Information aufweisen.

19. Verarbeitungsvorrichtung nach einem der Ansprüche 14 bis 18, wobei die Kommunikationsvorrichtung (130) eine Mobilkommunikationsvorrichtung aufweist, wobei die Mobilkommunikationsvorrichtung in Betrieb mit einem Drahtloskommunikationsnetz (110) gekoppelt ist.

20. Verarbeitungsvorrichtung nach einem der Ansprüche 14 bis 18, wobei die Kommunikationsvorrichtung (130) einen Computer aufweist, der in Betrieb mit einem Kommunikationsnetz gekoppelt ist.

## Revendications

1. Procédé de fourniture d'indicateurs d'état (340) associés à des informations demandées à un site web (132) par un dispositif (130), ledit procédé comprenant les étapes consistant à :
envoyer une demande d'informations issues du site web (132) à un navigateur (222) fonctionnant sur le dispositif (130) ;
recevoir ladite demande sur une passerelle (120) ;
traiter ladite demande sur ladite passerelle (120) et émettre ladite demande vers le site web (132) ;
recevoir des informations du site web (132) et placer lesdites informations dans une mémoire cache (144) sur ladite passerelle (120) ;
produire un ou plusieurs indicateurs d'état (340) associés auxdites informations au fur et à mesure qu'elles sont placées dans ladite mémoire cache (144) ; et
mettre lesdits un ou plusieurs indicateurs d'état (340) à la disposition du dispositif (130).

2. Procédé selon la revendication 1, dans lequel ladite étape de mise à la disposition dudit dispositif (130) desdits un ou plusieurs indicateurs d'état (340) comprend l'étape consistant à émettre lesdits un ou plusieurs indicateurs d'état (340) vers ledit dispositif (130) en réponse à une demande d'état (330), ladite demande d'état (330) étant produite sur le dispositif (130).

3. Procédé selon la revendication 2, dans lequel ladite demande d'état comprend un lien HTML (pour « *HyperText Markup Language* » - Langage de balisage hypertextuel) (330), ledit lien HTML (330) constituant une réponse à une saisie de l'utilisateur sur le dispositif (130).

4. Procédé selon l'une quelconque des revendications 1 à 3, dans lequel lesdits indicateurs d'état (340) comprennent un ou plusieurs éléments parmi les suivants : pourcentage en mémoire cache (342), estimation de l'heure de remise (346), pourcentage placé en mémoire cache sur la passerelle (120), pourcentage placé en mémoire cache sur le dispositif (130) et ancienneté des informations placées en mémoire cache.

5. Procédé selon l'une quelconque des revendications précédentes, dans lequel le dispositif (130) est constitué d'un dispositif de communication mobile.

6. Système (100) destiné à fournir des informations d'état associées à une demande d'informations provenant d'un site web (132), reçue d'un dispositif (130) sur un réseau de communication (110), ledit système (100) comprenant :
un navigateur (222) s'exécutant sur le dispositif (130) et répondant à une entrée pour produire la demande d'informations ;
un serveur intermédiaire (120) qui est couplé au réseau de communication (110), qui répond à la demande d'informations et qui possède un composant destiné à émettre (126) la demande vers le site web (132) ; et
ledit serveur intermédiaire (120) possédant une mémoire cache (144) destinée à placer en mémoire cache des informations reçues du site web (132), un composant destiné à produire (142) un ou plusieurs indicateurs d'état (340) associés auxdites informations au fur et à mesure qu'elles sont placées en mémoire cache et un composant destiné à émettre (140) un ou plusieurs desdits indicateurs d'état (340) vers le dispositif (130).

7. Système selon la revendication 6, dans lequel ledit composant destiné à émettre (140) un ou plusieurs indicateurs d'état (340) est conçu pour répondre à une demande d'état (330) provenant du dispositif (130).

8. Système selon la revendication 6 ou la revendication 7, dans lequel ledit serveur intermédiaire (120) possède un fichier HTML (142) et lesdits un ou plusieurs indicateurs d'état (340) sont stockés dans ledit fichier HTML (142).

9. Système selon la revendication 8, dans lequel ladite demande d'état comprend un lien HTML (330) associé audit fichier HTML (142) et ledit lien HTML (330) répond à une saisie de l'utilisateur sur le dispositif (130).

10. Système selon l'une quelconque des revendications 6 à 9, dans lequel ledit dispositif (130) est conçu pour afficher lesdits un ou plusieurs indicateurs d'état (340).

11. Système selon l'une quelconque des revendications 6 à 10, dans lequel lesdits indicateurs d'état (340) comprennent un ou plusieurs éléments parmi les suivants :
pourcentage en mémoire cache (342), estimation de l'heure de remise (346), pourcentage placé en mémoire cache sur la passerelle (120), pourcentage placé en mémoire cache sur le dispositif (130) et ancienneté des informations placées en mémoire cache.

12. Système selon l'une quelconque des revendications 6 à 11, dans lequel ledit serveur intermédiaire (120) est associé à un serveur d'entreprise.

13. Système selon l'une quelconque des revendications 6 à 12, dans lequel ledit serveur intermédiaire (120) est situé derrière un coupe-feu (118).

14. Dispositif de traitement destiné à fournir des informations d'état associées à une demande d'informations issues d'un site web (132), ledit dispositif de traitement comprenant :
une mémoire cache (144) destinée à placer des informations reçues du site web (132) ;
un composant destiné à produire (140) un ou plusieurs indicateurs d'état (340) associés auxdites informations au fur et à mesure qu'elles sont placées en mémoire cache ;
un fichier (142) destiné à stocker lesdits un ou plusieurs indicateurs d'état (340) ; et
un composant (140) qui répond à une demande d'état provenant d'un dispositif de communication (130) en émettant un ou plusieurs desdits indicateurs d'état (340) vers le dispositif de communication (130).

15. Dispositif de traitement selon la revendication 14, dans lequel ladite demande d'état comprend un lien HTML (330) et ledit lien HTML (330) est associé audit fichier (142).

16. Dispositif de traitement selon la revendication 15, dans lequel ledit fichier (142) constitue un fichier HTML et ledit fichier HTML est lié audit lien HTML (330) sur ledit dispositif de communication (130).

17. Dispositif de traitement selon la revendication 16, dans lequel le dispositif de communication (130) possède une interface utilisateur graphique (310) destinée à activer ledit lien HTML (330) et à afficher lesdits un ou plusieurs indicateurs d'état (340) émis vers ledit dispositif de communication (130).

18. Dispositif de traitement selon l'une quelconque des revendications 14 à 17, dans lequel lesdits indicateurs d'état (340) comprennent un ou plusieurs éléments parmi les suivants : pourcentage en mémoire cache (342), estimation de l'heure de remise (346), pourcentage placé en mémoire cache sur la passerelle (120), pourcentage placé en mémoire cache sur le dispositif (130) et ancienneté des informations placées en mémoire cache.

19. Dispositif de traitement selon l'une quelconque des revendications 14 à 18, dans lequel ledit dispositif de communication (130) comprend un dispositif de communication mobile, ledit dispositif de communication mobile étant couplé en service à un réseau de communication sans fil (110).

20. Dispositif de traitement selon l'une quelconque des revendications 14 à 18, dans lequel ledit dispositif de communication (130) comprend un ordinateur couplé en service à un réseau de communication.
